# EUROPEAN PATENT SPECIFICATION

(11) **EP 3 095 334 B1**
(45) Date of publication and mention of the grant of the patent: **27.03.2019**
(21) Application number: 15189643.8
(22) Date of filing: 13.10.2015
(51) Int. Cl.: A23L 3/3418, A23B 7/148, B65B 25/04, B65D 81/20, B65B 31/00, B65B 55/18, A23L 19/00

(54) **METHOD OF PACKAGING COOKED VEGETABLE FOOD PRODUCTS**
VERFAHREN ZUM VERPACKEN VON GEKOCHTEN PFLANZLICHEN LEBENSMITTELPRODUKTEN
PROCÉDÉ D'EMBALLAGE DE PRODUITS ALIMENTAIRES À BASE DE LÉGUMES CUITS

(30) Priority: 18.05.2015 IT UB20150883
(43) Date of publication of application: 23.11.2016
(73) Proprietor: Innocenzi, Fiero, 00156 Roma (IT)
(72) Inventor: CERES, M Carmela, I-83040 Caposele, Avellino (IT)
(74) Representative: Long, Giorgio

(56) References cited:
- EP-A1- 0 968 920
- EP-A1- 1 375 354
- WO-A1-2014/043744
- AU-B2- 611 880
- GB-A- 1 202 685
- US-A1- 2004 151 812
- DATABASE FSTA [Online] INTERNATIONAL FOOD INFORMATION SERVICE (IFIS), FRANkFURT-MAIN, DE; 1 January 2005 (2005-01-01), NICOLAIS V ET AL: "Product innovation in food science: ready-to-eat products.", XP002753170, Database accession no. FS-2006-01-Jh0066 -& NICOLAIS V ET AL: "Product innovation in food science: ready-to-eat products.", ITALIAN FOOD AND BEVERAGE TECHNOLOGY, October 2005 (2005-10), pages 5-9, XP002753667, DEP. OF AGRIC. ENG. & AGRON., UNIV. DEGLI STUDI DI NAPOLI FEDERICO II, ITALY
- Ragaert, P., Vermeulen, A., Buntinx, M., Peeters, R.: "New research gives further insights on O2-ingress in food packaging", New Food Magazine, vol. 17, no. 1 27 February 2015 (2015-02-27), pages 8-11, XP002753171, Retrieved from the Internet: URL:http://web.archive.org/web/20150227123 402/http://www.newfoodmagazine.com/13156/n ew-food-magazine/digital-issues/february-2 013-digital-edition/ [retrieved on 2016-01-19]
- Anonymous: "EVAL, EVOH Barrier Film", KURARAY - EVAL , 19 March 2013 (2013-03-19), pages 1-12, XP002753172, Retrieved from the Internet: URL:http://web.archive.org/web/20130319122 744/http://www.eval.eu/media/28322/eval%20 film%20high%20res.pdf [retrieved on 2016-01-20]

## Description

### Technical field of the invention

The present invention is defined by the claims and relates to a method for packaging cooked vegetable food products.

### State of the art

Among packaged foods sold in supermarkets, fresh or cooked products are increasingly often found with frozen products in consumer habits.

In particular, vegetable products, such as leafy or flower vegetables, are sold both fresh and cooked. Fresh leafy vegetables, such as salads, spinaches and beets, are packaged in bags while cooked vegetables - such as spinaches, cauliflowers or broccoli, are packaged in transparent containers. In any case, their shelf life does not exceed two or three days due to the rapid perishability of such foods.

Consumers' habits, on the other hand, are increasingly less often directed towards frequently supplies (2-3 times a week), supplies at retail stores far apart in time (once a week or even more, especially in places far from major cities) becoming increasingly popular mainly for reasons of time.

Similarly, the more and more reduced availability of time in families tends to push towards the consumption of cooked products.

It is therefore clear that the poor shelf life of cooked products currently on the market does not adequately meet the needs of consumers. The application of modified or protective atmosphere packaging to cooked vegetables products has been known in the art, as for example disclosed in the article "Product innovation in food science: ready-to-eat products", and in the patent documents EP0968920 A1, EP1375354 A1 and GB1202685.

### Summary of the invention

An object of the present invention is to provide a method of packaging cooked vegetable food products, in particular vegetables, which have a long shelf life, in particular up to 30 days from the day of 5 packaging.

An object of the present invention is therefore a method for packaging cooked vegetable food products as set out in the appended claims 1 to 8.

Further features and advantages of the process according to the invention will be apparent from the following description of preferred embodiments, given by 15 way of indication and not of limitation.

### Detailed description of the invention

The present invention relates to a method for packaging vegetable cooked food products, in particular vegetables, which comprises the following steps:
a) preparation of said vegetables;
b) washing of said vegetables in the presence of a sanitizing agent active against yeasts and molds;
c) drying of said washed vegetables;
d) cooking of said vegetables after drying;
e) rapid cooling of said cooked vegetables to a chilled temperature;
f) packaging of said vegetables in partially barriered packages in an atmosphere with low oxygen content and in the presence of carbon dioxide.

The vegetables used in the method according to the present invention are preferably selected from:
- fruit vegetables, such as zucchini, squash, peppers or eggplants;
- flower vegetables, such as artichokes, cauliflowers, rapini and broccoli;
- legumes, such as broad beans, peas, beans, green beans, lentils and chickpeas;
- leafy vegetables, such as radicchio, chicory, endive, spinaches, turnip greens, beets, cabbage and chicory catalogna;
- stem vegetables, such as fennels, cardoons and asparagus;
- root vegetables, such as carrots;
- tuber vegetables, such as potatoes;
- bulb vegetables, such as onions and leeks.

Step a) of preparation of vegetables typically includes the selection of raw materials, with the discard of the vegetables gone bad, and the trimming of the vegetables to eliminate roots, outer leaves and any peel. In some cases, the vegetables are also cut and diced.

In preferred embodiments, step a) and any storage of the vegetables either before or after processing are carried out at a temperature between 7 °C and 10 °C. It is also important that the equipment used is sanitized or sterilized.

Step b) of washing is preferably carried out with drinkable water at a temperature lower than 15 °C, more preferably between 10 °C and 14 °C.

Washing is carried out by bubbling in special tanks.

Step b) preferably involves at least two rinses with running water, followed by a wash with a solution of said sanitizing agent, preferably at a concentration of about 1 g/L, in turn followed by at least two final rinses.

In preferred embodiments, the sanitizing agent is tridecasodium hypochlorite-(tetrakis-phosphate) of formula Na₁₃(ClO)(PO₄)₄ (CAS n. 11084-85-8).

Step c) of drying is carried out by natural drainage, such as in perforated baskets, preferably keeping the washed vegetables at a temperature lower than 6 °C, more preferably of about 4 °C.

Step d) of cooking is carried out at temperatures of 80-90 °C, preferably of about 85 °C, until reaching a temperature of about 74 °C at the core of the vegetable. Preferably, the cooking times are 10-15 minutes for leafy vegetables and about 20 minutes for all the other vegetables.

Cooking is carried out in special kettles, in which typically the vegetables are placed inside perforated baskets to favor the drainage thereof at the end of cooking.

It is also preferable that leafy vegetables are eventually pressed so as to make them lose 20-30% of their weight after cooking.

According to the invention, step e) of rapid cooling is carried out so as to switch from a temperature of about 85 °C to a temperature of about -1 °C in a time of between 30 and 45 minutes.

After the cooling step, the cooked vegetables may be temporarily stored awaiting packaging at a temperature lower than or equal to 4 °C.

If step e) cannot be carried out immediately after step d), the cooked vegetables are temporarily stored at a temperature preferably comprised between 60 °C and 70 °C, more preferably at about 65 °C.

According to the invention, step f) of packaging is carried out portioning the cooked vegetables in partially barriered packages at a temperature lower than or equal to 4 °C and in a modified atmosphere.

According to the invention, the modified atmosphere consists of a mixture of carbon dioxide/nitrogen in a ratio by volume of about CO2 30%/N2 70%.

The packages consist of trays closable with a protective film.

According to the invention, the packages are therefore first subjected to vacuum, then to the above modified atmosphere, then the packages are sealed with the protective film.

According to the invention, the percentage of oxygen in the sealed package immediately after packaging must not be higher than about 1%, preferably about 0.9%.

The package, as said, comprises a tray in which the food is placed and a protective sealing film.

The tray consists of a partially barriered multilayer plastic material, preferably transparent. According to the invention, the partially barriered plastic material is a PP-EVOH-PP multilayer, wherein PP is polypropylene and EVOH is polyethylene vinyl alcohol.

EVOH is a polymer with high gas impermeability. The partially barriering effect for the purposes of the present invention is obtained by reducing the thickness of the inner layer of EVOH with respect to the multilayer materials commonly used for barriered packages. According to the invention, the thickness of the inner layer of EVOH is about 24 microns and the total thickness of the multilayer material is comprised between 1100 and 1200 microns.

According to the invention, the protective film is made of unbarriered polypropylene (PP) and preferably has anti-fog properties.

In fact, it is essential that the package is not totally impermeable to gases, since the entrance of a certain percentage of oxygen allows preserving the organoleptic properties of the vegetables, in particular color.

The packages of cooked vegetables of the invention have a shelf life of up to 30 days. It was measured that the percentage of oxygen changes from about 1% immediately after packaging to about 20% at the end of the shelf life.

## Claims

1. A method for packaging cooked vegetable food products, in particular vegetables, for obtaining a packaged cooked vegetable food product having a shelf life up to 30 days, which method comprises the following steps:
a) preparation of said vegetables by selection of raw materials, discarding of the vegetables gone bad and trimming of the vegetables to eliminate roots, outer leaves and any peel;
b) washing of said vegetables in the presence of a sanitizing agent active against yeasts and molds;
c) drying of said washed vegetables;
d) cooking of said vegetables after drying;
e) rapid cooling of said cooked vegetables to a chilled temperature, wherein rapid cooling is carried out by switching from a temperature of about 85 °C to a temperature of about -1 °C in a time of between 30 and 45 minutes;
f) packaging of said vegetables by portioning the cooked vegetables in partially barriered packages at a temperature lower than or equal to 4 °C and in a modified atmosphere, wherein the packages consist of trays closable with a protective film, the trays consisting of a partially barriered polypropylene-ethylene vinyl alcohol-polypropylene (PP-EVOH-PP) multilayer material, wherein the thickness of the inner layer of EVOH is about 24 microns and the total thickness of the multilayer material is comprised between 1100 and 1200 microns, wherein
the modified atmosphere consists of a mixture of carbon dioxide/nitrogen in a ratio by volume of about CO2 30%/ N2 70%,
wherein the packages are first subjected to vacuum prior to the modified atmosphere, and
wherein the percentage of oxygen in the sealed package immediately after packaging is not higher than about 1%, preferably not higher than about 0.9%, and
wherein the partially barriered packages containing the cooked vegetables are closed with a protective film made of unbarriered polypropylene.

2. A method according to claim 1, wherein said vegetables are selected from:
- fruit vegetables, such as zucchini, squash, peppers or eggplants;
- flower vegetables, such as artichokes, cauliflowers, rapini and broccoli;
- legumes, such as broad beans, peas, beans, green beans, lentils and chickpeas;
- leafy vegetables, such as radicchio, chicory, endive, spinaches, turnip greens, beets, cabbage and chicory catalogna;
- stem vegetables, such as fennels, cardoons and asparagus;
- root vegetables, such as carrots;
- tuber vegetables, such as potatoes;
- bulb vegetables, such as onions and leeks.

3. A method according to claim 1 or 2, wherein step a) and any storage of the vegetables either before or after processing are carried out at a temperature of between 7 °C and 10 °C.

4. A method according to any one of claims 1 to 3, wherein step b) of washing is carried out with drinkable water at a temperature lower than 15 °C.

5. A method according to any one of claims 1 to 4, wherein the sanitizing agent is used at a concentration of about 1 g/L and wherein said sanitizing agent is tridecasodium hypochlorite-(tetrakis-phosphate) of formula Na₁₃(ClO)(PO₄)₄.

6. A method according to any one of claims 1 to 5, wherein step c) of drying is carried out by natural drainage keeping the washed vegetables at a temperature lower than 6 °C.

7. A method according to any one of claims 1 to 6, wherein step d) of cooking is carried out at temperatures of 80-90 °C or of about 85 °C, until reaching a temperature of about 74 °C at the core of the vegetable.

8. A method according to any one of claims 1 to 7, wherein step d) is carried out with cooking times of 10-15 minutes for leaf vegetables and about 20 minutes for all the other vegetables.

## Patentansprüche

1. Verfahren zum Verpacken von gekochten pflanzlichen Nahrungsmittelprodukten, insbesondere Gemüse, um ein verpacktes, gekochtes pflanzliches Nahrungsmittelprodukt mit einer Haltbarkeit von bis zu 30 Tagen zu erhalten, wobei das Verfahren die folgenden Schritte umfasst:
a) Vorbereitung der Gemüse durch eine Auswahl von Rohmaterialien, Aussondern der Gemüse, die schlecht geworden sind, und Beschneiden der Gemüse, um Wurzeln, äußere Blätter und jegliche Haut zu entfernen;
b) Waschen der Gemüse in der Gegenwart eines Desinfektionsmittels, das gegen Hefen und Schimmelpilze aktiv ist;
c) Trocknen der gewaschenen Gemüse;
d) Kochen der Gemüse nach dem Trocknen;
e) schnelles Abkühlen der gekochten Gemüse auf eine gekühlte Temperatur, wobei ein schnelles Abkühlen durch ein Wechseln einer Temperatur von etwa 85 °C auf eine Temperatur von etwa -1 °C in einer Zeit zwischen 30 und 45 Minuten durchgeführt wird;
f) Verpacken der Gemüse durch Portionieren der gekochten Gemüse in teilweise mit einer Barriere ausgestatteten Verpackungen bei einer Temperatur niedriger als oder gleich 4 °C und in einer modifizierten Atmosphäre, wobei die Verpackungen aus mit einem Schutzfilm verschließbaren Tabletts besteht, wobei die Tabletts aus einem teilweise mit einer Barriere ausgestatteten mehrschichtigen Polypropylen-Ethylenvinylalkohol-Polypropylen (PP-EVOH-PP) Material bestehen, wobei die Dicke der inneren Schicht aus EVOH etwa 24 Mikrometer beträgt und die Gesamtdicke des mehrschichtigen Materials zwischen 1100 und 1200 Mikrometer liegt, wobei die modifizierte Atmosphäre aus einer Mischung aus Kohlenstoffdioxid/Stickstoff in einem Volumenverhältnis von etwa CO2 30% / N2 70% besteht,
wobei die Verpackungen erst einem Vakuum vor der modifizierten Atmosphäre ausgesetzt werden, und
wobei der Prozentsatz an Sauerstoff in der versiegelten Verpackung direkt nach Verpacken nicht höher als etwa 1%, bevorzugt nicht höher als etwa 0,9% beträgt, und
wobei die teilweise mit einer Barriere ausgestatteten Verpackungen, die die gekochten Gemüse enthalten, mit einem Schutzfilm aus barrierefreiem Polypropylen verschlossen sind.

2. Verfahren nach Anspruch 1, wobei die Gemüse ausgewählt sind aus:
- Fruchtgemüse, wie Zucchini, Kürbis, Paprika oder Auberginen;
- Blütengemüse, wie Artischocken, Blumenkohl, Rübstiel und Broccoli;
- Hülsenfrüchte, wie dicke Bohnen, Erbsen, Bohnen, grüne Bohnen, Linsen und Kichererbsen;
- Blattgemüse, wie Radicchio, Chicoree, Endivien, Spinat, Rübengrün, Rüben, Kohl und Puntarelle;
- Stängelgemüse, wie Fenchel, Kardone und Spargel;
- Wurzelgemüse, wie Karotten;
- Knollengemüse, wie Kartoffeln;
- Zwiebelgemüse, wie Zwiebeln und Lauch.

3. Verfahren nach Anspruch 1 oder 2, wobei Schritt a) und jede Lagerung der Gemüse entweder vor oder nach einer Verarbeitung bei einer Temperatur zwischen 7 °C und 10 °C durchgeführt wird.

4. Verfahren nach einem der Ansprüche 1 bis 3, wobei Waschschritt b) mit Trinkwasser bei einer Temperatur unter 15 °C durchgeführt wird.

5. Verfahren nach einem der Ansprüche 1 bis 4, wobei das Desinfektionsmittel in einer Konzentration von etwa 1 g/l verwendet wird und wobei das Desinfektionsmittel Tridecanatriumhypochlorit-(tetrakisphosphat) der Formel Na₁₃(ClO)(PO₄)₄ ist.

6. Verfahren nach einem der Ansprüche 1 bis 5, wobei Trockenschritt c) durch natürliches Abtropfen durchgeführt wird, wobei die gewaschenen Gemüse bei einer Temperatur unter 6 °C gehalten werden.

7. Verfahren nach einem der Ansprüche 1 bis 6, wobei der Kochschritt d) bei Temperaturen von 80 bis 90 °C oder etwa 85 °C durchgeführt wird, bis im Kern des Gemüses eine Temperatur von etwa 74 °C erreicht ist.

8. Verfahren nach einem der Ansprüche 1 bis 7, wobei Schritt d) mit Kochzeiten von 10-15 Minuten für Blattgemüse und etwa 20 Minuten für alle anderen Gemüse durchgeführt wird.

## Revendications

1. Procédé d'emballage de produits alimentaires à base de légumes cuits, en particulier de légumes, pour obtenir un produit alimentaire à base de légumes cuits emballé présentant une durée de conservation jusqu'à 30 jours, lequel procédé comprend les étapes suivantes :
a) la préparation desdits légumes par sélection de matières premières, le rejet de légumes gâtés et le découpage des légumes pour éliminer des racines, feuilles extérieures et toute peau ;
b) le lavage desdits légumes en présence d'un agent désinfectant actif contre des levures et moisissures ;
c) le séchage desdits légumes lavés ;
d) la cuisson desdits légumes après le séchage ;
e) le refroidissement rapide desdits légumes cuits à une température de réfrigération, dans lequel le refroidissement rapide est réalisé en passant d'une température d'environ 85 °C à une température d'environ -1 °C dans un temps entre 30 et 45 minutes ;
f) l'emballage desdits légumes par conditionnement en portions des légumes cuits dans des emballages partiellement cloisonnés à une température inférieure ou égale à 4 °C et dans une atmosphère modifiée, dans lequel les emballages sont constitués de plateaux pouvant être refermés avec un film protecteur, les plateaux étant constitués d'un matériau multicouche de polypropylène- éthylène/alcool vinylique - polypropylène (PP-EVOH-PP) partiellement cloisonné, dans lequel l'épaisseur de la couche intérieure d'EVOH est d'environ 24 microns et l'épaisseur totale du matériau multicouche est comprise entre 1 100 et 1 200 microns, dans lequel l'atmosphère modifiée est constitué d'un mélange de dioxyde de carbone/azote dans un rapport en volume d'environ 30 % en CO₂ / 70 % en N₂,
dans lequel les emballages sont tout d'abord soumis à un vide avant d'être soumis à l'atmosphère modifiée, et
dans lequel le pourcentage d'oxygène dans l'emballage scellé immédiatement après l'étape d'emballage n'est pas supérieur à environ 1 %, de préférence pas supérieur à environ 0,9 %, et
dans lequel les emballages partiellement cloisonnés contenant les légumes cuits sont fermés avec un film protecteur réalisé en polypropylène non cloisonné.

2. Procédé selon la revendication 1, dans lequel lesdits légumes sont sélectionnés parmi :
- des légumes-fruit, tels que courgette, courge, poivrons ou aubergines ;
- des légumes-fleur, tels que artichauts, choux-fleur, brocolis-rave et brocoli ;
- des légumineuses, telles que fèves, pois, haricots, haricots verts, lentilles et pois chiches ;
- des légumes-feuille, tels que radis, chicorée, endive, épinards, feuilles de navet, betteraves, chou et chicorée de Catalogne ;
- des légumes-tige, tels que fenouils, cardes et asperges ;
- des légumes-racine, tels que carottes ;
- des légumes-tubercule, tels que des pommes de terre ;
- des légumes-bulbe, tels que des oignons et poireaux.

3. Procédé selon la revendication 1 ou 2, dans lequel l'étape a) et tout stockage des légumes avant ou après le traitement sont réalisés à une température entre 7 °C et 10 °C.

4. Procédé selon l'une quelconque des revendications 1 à 3, dans lequel l'étape b) de lavage est réalisée avec de l'eau potable à une température inférieure à 15 °C.

5. Procédé selon l'une quelconque des revendications 1 à 4, dans lequel l'agent désinfectant est utilisé à une concentration d'environ 1 g/L et dans lequel ledit agent désinfectant est de l'hypochloritetetrakis(phosphate) de tridécasodium de formule Na₁₃(ClO)(PO₄)₄.

6. Procédé selon l'une quelconque des revendications 1 à 5, dans lequel l'étape c) de séchage est réalisée par drainage naturel en maintenant les légumes lavés à une température inférieure à 6 °C.

7. Procédé selon l'une quelconque des revendications 1 à 6, dans lequel l'étape d) de cuisson est réalisée à des températures de 80-90 °C ou d'environ 85 °C jusqu'à atteindre une température d'environ 74 °C au coeur du légume.

8. Procédé selon l'une quelconque des revendications 1 à 7, dans lequel l'étape d) est réalisée avec des temps de cuisson de 10 à 15 minutes pour des légumes-feuille et d'environ 20 minutes pour tous les autres légumes.
